# EUROPEAN PATENT APPLICATION

(11) **EP 3 758 446 A1**
(43) Date of publication of application: **30.12.2020**
(21) Application number: 19182897.9
(22) Date of filing: 27.06.2019
(51) Int. Cl.: H05B 7/144, H02M 5/12, H02M 1/12, H02M 1/32, H02M 1/36, H02M 5/257, H02M 5/293

(54) **ARC FURNACE POWER SUPPLY WITH CONVERTER CIRCUIT**

(71) Applicant: ABB Schweiz AG, 5400 Baden (CH)
(72) Inventor: STEIMER, Peter Karl, 5420 Ehrendingen (CH)
(74) Representative: Qip Patentanwälte Dr. Kuehn & Partner mbB

(57) **Abstract**

A power supply system (12) for an electric arc furnace (10) comprises an AC input (20) connectable to an electrical grid (22) and an AC output (24) for supplying at least one power electrode (14) of the arc furnace (10). The power supply system (12) further comprises a converter circuit (46a, 46b, 46c) interconnected between the AC input (20) and the AC output (24). The converter circuit (46a, 46b, 46c) comprises at least one converter cell (64) with a capacitor (108) and semiconductor switches (104) for series connecting the capacitor between a circuit input (56) and a circuit output (58) of the converter circuit (46a, 46b, 46c).

## Description

### FIELD OF THE INVENTION

The invention relates to the field of arc furnaces. In particular, the invention relates to a power supply system for an electric arc furnace, a method for controlling the power supply system as well as to an arc furnace with such a power supply system.

### BACKGROUND OF THE INVENTION

Electric arc furnaces are often directly connected to an AC grid via a transformer. It then may be difficult to limit the electrode current during operation, which may limit the electrode usage and the productivity. Additionally, the transformer may need then a costly on-load tap changer system, which is often used and the arc furnace may generate flicker in the AC grid. Therefore, an additional static var compensator may be necessary to mitigate the flicker issues.

In EP 0 589 544 B1 and US 6 603 795 B2, an arc furnace power supply is shown, which is adapted for clipping the electrode current with series-connected antiparallel thyristors with or without a parallel inductor. In such a way, the productivity of the arc furnace may be improved. However, by clipping the current, an internal resistance of the arc furnace may be increased more than necessary, which may reduce the efficiency of the arc furnace.

### DESCRIPTION OF THE INVENTION

It is an objective of the invention to provide an arc furnace power supply, with controllable electrode current and high efficiency.

This objective is achieved by the subject-matter of the independent claims. Further exemplary embodiments are evident from the dependent claims and the following description.

A first aspect of the invention relates to a power supply system for an electric arc furnace. An electric arc furnace may be a device, which is adapted for melting or smelting metal materials with the aid of an arc that is produced by an electric current. The electric current is produced by the power supply system, which may be connected between a medium AC electrical grid and electrodes of the arc furnace. The power supply system also may comprise a transformer, which transforms a medium AC input voltage into a low AC output voltage, which is supplied to the electrodes.

A medium voltage may be a voltage between 1 kV and 20 kV. A low voltage may be a voltage below 1 kV. It has to be noted that the current through the electrodes may be higher than 1000 A.

The power supply system may be a multi-phase system having several, such as three, phases. The input voltage may be a three-phase voltage, with, for example, 50 or 60 Hz.

According to an embodiment of the invention, the power supply system comprises an AC input, which may comprise one or more phases, connectable to an electrical grid and an AC output, which may comprise one or more phases, for supplying at least one power electrode of the arc furnace. The AC input may comprise three phases. Also, the AC output may comprise three phases.

According to an embodiment of the invention, the power supply system comprises a converter circuit interconnecting the AC input and the AC output. The converter circuit may be or may comprise a voltage source inverter, i.e. a converter with a capacitor as energy storage.

The converter circuit may comprise at least one converter cell with a capacitor and semiconductor switches for series connecting the capacitor between a circuit input and a circuit output of the converter circuit. The converter cell may be a floating converter cell interconnected into a phase of the power supply system.

The converter circuit and/or the converter cell may be a voltage source inverter, which may be adapted to process about 10% to 15% of a main power of the power supply system.

With the converter circuit and/or the converter cell a power flow through the power supply system may be controlled and optionally a short-circuit current may be limited. In particular, the current through the power supply device may be controlled and/or adjusted to a specific defined current, which may be lower and/or higher than a maximal current that may be generated by the power supply system. A higher current may be generated with current boosting.

According to an embodiment of the invention, the semiconductor switches of the converter cell form two parallel connected half-bridges, which midpoints are connected between the circuit input and the circuit output. A half-bridge may comprise two series-connected semiconductor switches providing the midpoint between them. The two paralleled half-bridges may be seen as a full-bride. The semiconductor switches may be IGCTs and/or IGBTs.

According to an embodiment of the invention, the capacitor is connected in parallel to the half-bridges. In such a way, the capacitor may be disconnected from a current path between the circuit input and the circuit output and/or may be connected to the current path. Furthermore, the capacitor may be connected in reverse directions to the current path.

According to an embodiment of the invention, the converter circuit comprises a plurality of converter cells connected in series between the circuit input and the circuit output. Each of these converter cells may be designed as described above and below. In such a way, the voltage rating of the converter circuit may be improved.

According to an embodiment of the invention, the converter circuit comprises a controllable bypass switch, which is connected in parallel with the at least one converter cell and which is adapted for connecting and disconnecting the circuit input and the circuit output. When the bypass switch is open, a current through the converter circuit solely may flow through the at least one converter cell from the circuit input to the circuit output and vice versa. In the case, the bypass switch is closed, the current also may flow from the circuit input through the bypass switch to the circuit output and vice versa. With the bypass switch, the converter cell may be bypassed and/or protected from overcurrent and/or overvoltage.

According to an embodiment of the invention, the bypass switch is composed of semiconductor switches. For example, the bypass switch may comprise one or more transistors or thyristors, such as IGBTs, IGCTs, etc.. Thy bypass functionality may be realized by semiconductor switches (such as IGCTs) of the converter cells, so that no separate bypass may be needed.

According to an embodiment of the invention, the bypass switch is a bidirectional switch. This may be achieved by connecting two unidirectional semiconductor switches anti-parallel to each other.

According to an embodiment of the invention, the bypass switch comprises two anti-parallel semiconductor switches, such as two anti-parallel thyristors. Thyristors are adapted for switching high currents as usually are present in the power supply of an arc furnace.

According to an embodiment of the invention, the bypass switch is a mechanical switch. A mechanical switch may comprise mechanical components that are actuated by a drive for disconnecting a connecting its inputs.
According to an embodiment of the invention, an inductor may be connected in series with the at least one converter cell. In general, it may be that optional one or more passive reactances (such as capacitors, inductors and/or reactors) are connected in series with the converter cell and/or in parallel with the bypass switch.
According to an embodiment of the invention, a further inductor may be connected in series with the bypass switch between the circuit input and the circuit output. The further inductor may be decoupled from the current through the converter circuit, when the bypass switch is open.

According to an embodiment of the invention, the further inductor is connected in parallel with the at least one converter cell and/or a passive reactance, such as an inductor, capacitor, etc. connected in series with the at least one converter cell. When the bypass switch is closed, a current through the bypass switch also may flow through the further inductor.

According to an embodiment of the invention, an inductor, which is connected in series with the at least one converter cell, has a higher inductance as the further inductor. For example, the inductor may have an inductance at least 10 times higher as the further inductor.

According to an embodiment of the invention, the power supply system further comprises a transformer, which is interconnected between the AC input and the AC output of the power supply system. As already described, the transformer, which may be a multi-phase transformer, may transform a higher AC input voltage into a lower AC output voltage.

According to an embodiment of the invention, the transformer may be interconnected between the AC input and the converter circuit. In other words, the converter circuit may be provided on the side of the power supply system with the higher voltage and/or a primary side of the transformer.

According to an embodiment of the invention, the transformer may be interconnected between the converter circuit and the AC output. In other words, the converter circuit may be provided on the side of the power supply system with the lower voltage and/or a secondary side of the transformer.

According to an embodiment of the invention, the transformer has windings connected to a star-point at a primary side and/or a secondary side, wherein the converter circuit is connected into the star-point. The converter circuit may comprise three phase parts, which are star-connected at one end and are connected to the windings on another end. Each of these phase parts may be designed like a one phase converter circuit as described in the above and the below.

In summary, the converter circuit may be connected to the primary side, to the secondary side, in the primary side and/or in the secondary side of the transformer.

According to an embodiment of the invention, the power supply system further comprises a harmonic filter interconnected in the AC input. With the harmonic filter, higher order harmonics in the AC input voltage, which may be generated by components of the arc furnace, may be filtered out. The harmonic filter may comprise at least two filter components, each of which comprises a filter capacitor and a filter inductor and each of which is adapted to another higher order harmonic of a supply voltage, i.e. the AC input voltage.

The harmonic filter may be a capacitive and/or inductive filter connected in parallel with the AC input. In the case of a multi-phase system, the harmonic filter components may star-connect the phases of the AC input. It has to be noted that also a series-connected filter may be interconnected into the AC input.

According to an embodiment of the invention, the power supply system further comprises an active inductive reactor interconnected into the AC input, wherein the active inductive reactor comprises a bypass switch and an inductor connected to the AC input. The bypass switch of the active inductive reactor may be designed as the bypass switch of the converter circuit, for example with two anti-parallel thyristors. In the case of a multi-phase system, the active inductive reactor may have reactor branches, which star-connect the phases of the AC input.

According to an embodiment of the invention, the power supply system further comprises a compensating converter interconnected into the AC input. The compensating converter may be voltage-source based STATCOM. In the case of a multi-phase system, the compensating converter may have converter branches, which star-connect the phases of the AC input.

The active inductive reactor and/or the compensating converter may be controlled by a controller of the power supply system and/or may be used for compensating variations of the power flow through the power supply system and/or for compensating voltage variations in the AC input.

According to an embodiment of the invention, the active inductive reactor and/or the compensating converter are controlled to minimize a flicker in the AC input. Flicker may be minimized at the point-of-common connection of the arc furnace to the electrical grid. The flicker reduction may be a second control objective in addition to a control of the power flow to the arc furnace. However, additionally and/or alternatively, flicker also may be controlled with the at least one converter cell of the converter circuit.

Flicker in the electrical grid may be fluctuations in the voltage of the grid and may be determined based on voltage measurements in the AC input. The standard IEC 61000-4-15 provides methods and/or formulas for estimating flicker.

According to an embodiment of the invention, the AC input has at least two phases, such as three phases, and/or the AC output has at least two phases, such as three phases. A converter circuit as described in the above and in the following may be interconnected in each phase of the AC input or the AC output. In the case of a multi-phase system, every phase of the side of the power supply before or after the transformer may be provided with a converter circuit.

Further aspects of the invention relate to a method and a controller for controlling the power supply system as described in the above and in the following. It has to be understood that features of the method as described in the above and in the following may be features of the controller and/or the power supply system as described in the above and in the following. The controller may be adapted for automatically performing the method.

According to an embodiment of the invention, the method comprises: determining an electrode current supplied to the at least one electrode; and controlling the at least one converter cell, such that the electrode current is adjusted to a defined current, such as a nominal current. A current through the power supply system may be measured by the controller at the input side and/or at the output side. Therefrom, the electrode current may be determined. Depending on the needed power to be supplied to the electrodes, which for example may depend on the phase of the melting process and/or the amount of melted material, a defined current may be provided and the controller may adjust the electrode current to this current. The defined current may be provided by the controller, for example based on measurements in the power supply system. The method allows current control, current limiting and/or current boosting. The defined current may be determined, such that current control, current limiting and/or current boosting is realized.

The power flow through the power supply system may be controlled by controlling and/or influencing a phase shift between the AC input voltage (i.e. the voltage at the AC input) and an AC output voltage (i.e. the voltage at the AC output applied to the at least one electrode). This phase shift may be adjusted by controlling the at least one converter cell.

According to an embodiment of the invention, the method further comprises: determining a flicker in the AC input of power supply system; and controlling the converter cell, such that the flicker is reduced. Flicker may be actively controlled with the converter circuit. Therefore a compensating converter (such as described above and below may be omitted or at least may be downsized).

According to an embodiment of the invention, the method further comprises: during a start-up of the power supply system, bypassing the converter cell by closing a bypass switch; and, after energization of a transformer connected between the AC input and the AC output, controlling the converter cell for adjusting the electrode current and opening the bypass switch. In such a way, surge currents generated by the transformer, when connecting the power supply system to an electrical grid may be bypassed and the converter cell may be protected during start-up.

According to an embodiment of the invention, the method further comprises: detecting an overvoltage and/or a surge current in the converter circuit; and protecting the converter circuit, when an overvoltage and/or a surge current is detected, by switching the converter circuit in a bypass state. A bypass state may be a state, in which the converter cell or at least components of the converter cell, such as a cell capacitor, are bypassed.

According to an embodiment of the invention, the converter circuit is switched into a bypass state by switching the converter cell into a bypass state. In the bypass state, a cell capacitor may be disconnected from inputs of the converter cell.

According to an embodiment of the invention, the converter circuit is switched into a bypass state by switching the converter cell by closing and/or opening a bypass switch. The bypass switch may be used to protect the converter circuit against overvoltage and/or surge currents, for example during start-up and/or transient operation. The voltage and/or the current in the converter circuit may be measured by the controller, which also may compare these values with thresholds, which indicate an overvoltage and/or a surge current. When the corresponding values exceed the threshold, the protection function may be activated. For example, the bypass switch may be closed to reduce the voltage across the converter cell and optional series connected reactors and/or to reduce a current through these components. When the fault situation is over, the bypass switch can be returned to its initial state.

A further aspect of the invention relates to an electric arc furnace, which comprises a power supply system as described in the above and the following.

According to an embodiment of the invention, the electric arc furnace furthermore comprises a vessel for receiving metal material and/or power electrodes for melting the metal material, when supplied with current from the power supply system. The power electrodes also may have a mechanical mechanism, which is adapted for adjusting a distance of the electrodes to the metal material.

The electric arc furnace also may comprise a controller for the power supply system adapted for performing the method as described in the above and in the below. The controller of the power supply system also may control the mechanical mechanism for moving the electrodes for adjusting the impedance of the system comprising the electrodes and the metal material. Less use of a tap changer and/or less electrode movements are expected. Tap changers may even be eliminated.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 shows a schematic circuit diagram of an arc furnace according to an embodiment of the invention.
Fig. 2 shows a schematic circuit diagram of an arc furnace according to a further embodiment of the invention.
Fig. 3 shows schematic circuit diagram of a converter circuit for the arc furnace of Fig. 1 and 2.
Fig. 4 shows schematic circuit diagram of a further converter circuit for the arc furnace of Fig. 1 and 2.
Fig. 5 shows schematic circuit diagram of series-connected converter cells for the arc furnace of Fig. 1 and 2.
Fig. 6 shows a schematic circuit diagram of a transformer with a converter circuit for the arc furnace of Fig. 1 and 2.
Fig. 7 shows a schematic circuit diagram of a compensating converter for the arc furnace of Fig. 1 and 2.
Fig. 8 shows a schematic circuit diagram of an active inductive reactor for the arc furnace of Fig. 1 and 2.
Fig. 9 shows a flow diagram for a method for controlling the arc furnace of Fig. 1 and 2.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

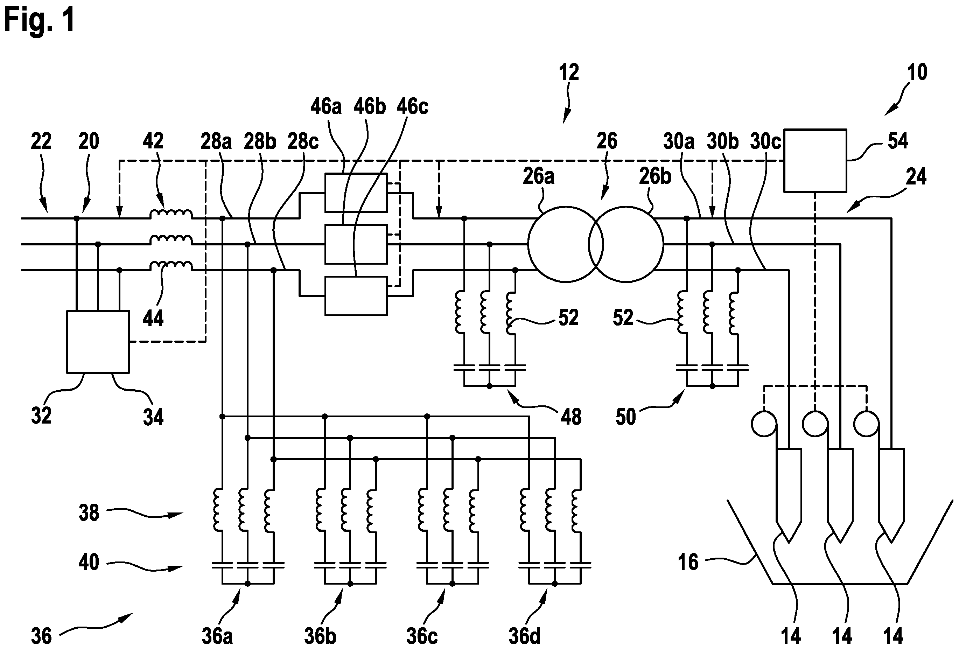

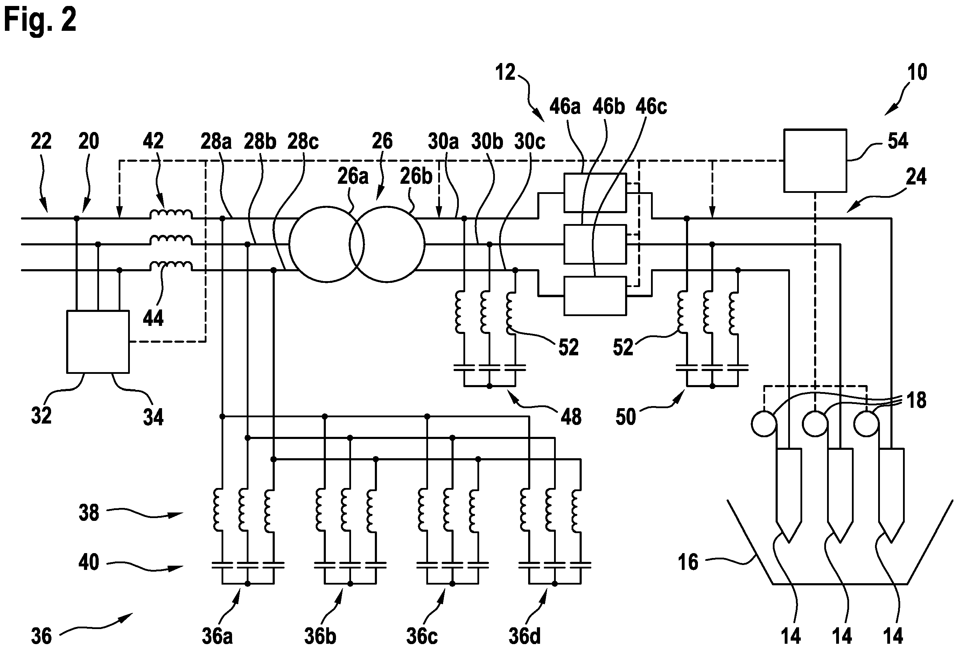

Fig. 1 and 2 show an arc furnace 10 with a power supply system 12, which supplies electrodes 14 of the arc furnace 10 with electrical power. The electrodes 14 may be provided in a vessel 16, which is adapted for accommodating metal material. When the electrodes 14 are supplied with current, an electrical arc is generated and the metal material is melted. The electrodes may be moved in the vessel with the aid of mechanical actuators 18. In such a way, the length of the arc may be controlled.

The power supply system 12 is connected with an AC input 20 to an electrical grid 22 and supplies with an AC output 24 the electrodes 14. The AC input 20 and the AC output 24 are galvanically separated by a transformer 26, wherein a primary side 26a of the transformer is connected to the AC input 20 and a secondary side 26b of the transformer 26 is connected to the AC output 24. The transformer 26 transforms a medium AC voltage from the electrical grid 22 into a low AC voltage at the AC output 24. Both voltages may have a frequency of 50 Hz or 60 Hz.

As shown in Fig. 1 and 2, the power supply system 12 may be a three-phase system. The AC input voltage may have three components and the power supply system 12 may have three phases 28a, 28b, 28c at the primary, medium voltage side 26a of the transformer 26. As shown, the power supply system 12 also may have three phases 30a, 30b, 30c at the secondary, low voltage side 26b of the transformer 26. However, it is also possible that a different number of phases are present as well on the primary side 26a as on the secondary side 26b. It is also possible that the numbers of phases are different on both sides 26a, 26b, for example, when the transformer 26 is designed with more than three windings at the secondary side 26b.

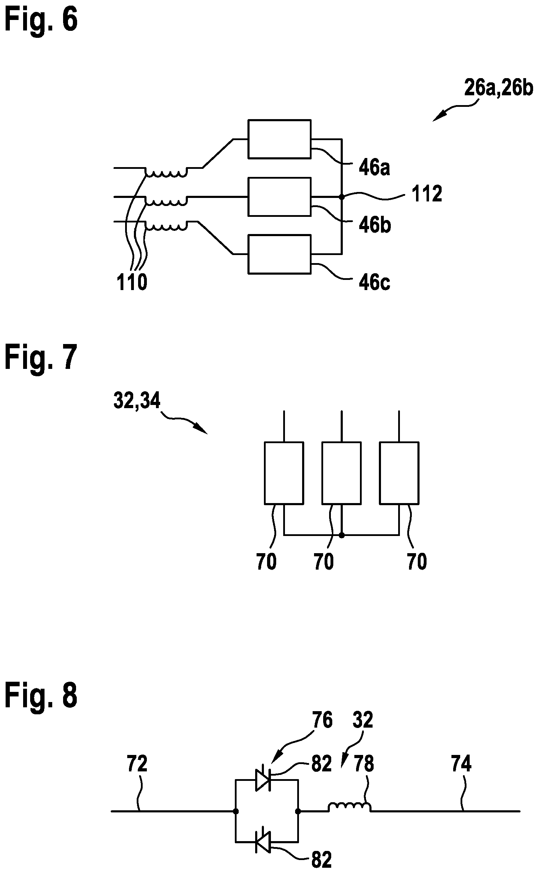

It may be that an active inductive reactor 32 and/or a compensating converter 34 is interconnected into and/or connected to the AC input 20, which is used for controlling flicker, which is generated by the arc furnace 10. The active inductive reactor 32 and/or a compensating converter 34 may be connected in parallel to the AC input 20. The components 32, 34 will be described in more detail below with respect to Fig. 7 and 8.

Furthermore, a harmonic filter 36 may be interconnected into and/or connected to the AC input 20. The harmonic filter 36 may be connected in parallel to the AC input 20. The harmonic filter 36 may comprise several filter components 36a, 36b, 36c, 36d, each of which is adapted to filter a specific higher order harmonic out of the AC voltage at the AC input 20. For example, the filter components 36a, 36b, 36c, 36d may be adapted for filtering out the 5^{th}, 7^{th}, 11^{th} and 13^{th} higher order harmonic. Each of the filter components 36a, 36b, 36c, 36d may be an LC filter and may comprise a capacitor 38 and an inductor 40, which may be connected in series. In the present case of a system with three phases 28a, 28b, 28c, each of the filter components 36a, 36b, 36c, 36d may comprise for each phase a capacitor 38 and an inductor 40, which are star-connected.

It also may be that a line filter 42, which is series-connected into the AC input 20, is present, which line filter 42 may comprise an inductor 44, which is series-connected into each phase 28a, 28b, 28c.

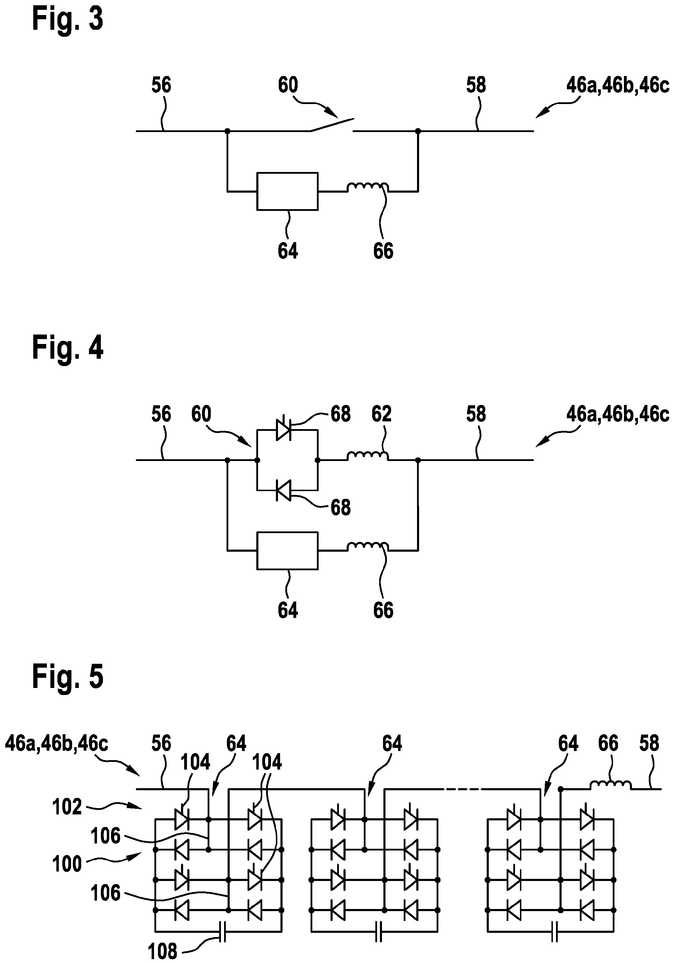

As shown in Fig. 1, the power supply system 12 furthermore may comprise a converter circuit 46a, 46b, 46c, which is series-connected into each phase 28a, 28b 28c of the primary side. As shown in Fig. 2, alternatively or additionally, a converter circuit 46a, 46b, 46c may be series-connected into each phase 30a, 30b, 30c of the secondary side. The converter circuits 46a, 46b, 46c are used for current limitation, current boosting and/or power control and will be described in more detail with respect to Fig. 3 to 5.

It may be possible that a passive filter/reactor 48 is connected between the circuits 46a, 46b, 46c and the transformer 26 and/or that a passive filter/reactor 50 is connected between the transformer 26 and the AC output 24. Such a passive filter/reactor 48 (or 50) may comprise three star-connected inductors 52, each of which is connected to a phase 28a, 28b, 28c (or 30a, 30b, 30c) of the primary side (or secondary side) of the power supply system 12.

Fig. 1 and 2 also show a controller 54 for controlling the arc furnace and the power supply system 12. The controller 54 may receive measurement values from voltages and/or currents in the power supply system 12, such as an AC input voltage, an AC input current, an intermediate voltage and an intermediated current between the converter circuits 46a, 46b, 46c and the transformer, an AC output voltage and an AC output current. All these quantities may be multi-phase quantities.

Based on these measurement values and nominal quantities, such as a nominal electrode current, a nominal power supplied to the electrodes 14, a maximal flicker, etc., the controller may control the movement of the electrodes 14, i.e. the mechanical actuators 18, the active inductive reactor 32, the compensating converter 34 and the converter circuits 46a, 46b, 46c. This will also be described in more detail below.

Fig. 3 shows one of the converter circuits 46a, 46b, 46c, which may be equally designed. The converter circuit 46a, 46b, 46c comprises a circuit input 56 and a circuit output 58, with which it is interconnected in the respective phase 28a, 28b, 28c, 30a, 30b, 30c.

The converter circuit 46a, 46b, 46c may comprise a bypass switch 60, a converter cell 64 and an optional inductor 66 connected in series with the converter cell 64. The bypass switch 60 and the converter cell 64 are parallel-connected between the input 56 and the output 58. It has to be noted that the bypass switch 60 is optional and that the converter circuit solely may comprise the converter cell 64 optionally together with the inductor 66. Converter cell switches may realize a bypass functionality and/or bypass state of the converter cell 64.

In general, the bypass switch 60 may be a controllable, bidirectional switch. The controller 54 may control the bypass switch 60 to be opened (conducting) or closed (isolating).

Fig. 3 shows a mechanical bypass switch. In Fig. 4, the bypass switch is composed of semiconductor switches 68. The bypass switch 68 may be composed of two anti-parallel thyristors 68. Furthermore, it is shown that an inductor 62 may be series connected with the bypass switch 60. The inductor 62 may have an inductance at least 10 times smaller than the inductor 66.

Fig. 5 shows series-connected converter cells 64, which may be series-connected between the input 56 and the output 58 of the converter circuit 46a, 46b, 46c. Also, the series-connection of converter cells 64 may be series-connected with an inductor 66. The converter cells 64 also may be of a three-level full bridge type and/or may comprise three-level full bridges. Furthermore, the series-connection may be connected in parallel with a bypass switch 60 and/or an inductor 62 as shown in Fig. 3 and 4.

Each converter cell 64 may comprise a full-bridge 100, which is composed of two parallel half-bridges 102. Each half-bridge 102 comprises two series-connected semiconductor switches 104, such as IGBTs and/or IGCTs, for example with antiparallel diode. A midpoint 106 is provided between the semiconductor switches 104 of each half-bridge 102. The midpoints 106 of a converter cell 64 are interconnected into a current path between the input 56 and the output 58. A converter cell capacitor 108 is connected in parallel to the half-bridges 102. Via the control of the controller 54, the semiconductor switches 104 may be switched to disconnect the capacitor 108 from the midpoints 106, and to connect the capacitor in two directions to these midpoints 106. Additionally, the semiconductor switches 104 may be switched to select two redundant zero states, which bypass the capacitor 108. These zero states may be seen as a bypass state of the converter cell 64.

It has to be noted that the converter cell 64 of Fig. 3 and 4 may be designed like one of the converter cells 64 in Fig. 5.

Fig. 6 shows a further embodiments, how converter circuits 46a, 46b, 46c may be interconnected into the power supply 12. Fig. 6 shows the primary side 26a or alternatively the secondary side 26b of the transformer 26. The primary side 26a or the secondary side 26 of the transformer 26 comprises three windings 110, which are star-connected via a star-point 112. In Fig. 6, each winding 110 is connected via a converter circuit 46a, 46b, 46c with the star-point 112. The converter circuits 46a, 46b, 46c of Fig. 6 may be designed like the ones of Fig. 3 to 5. Fig. 7 shows the active inductive reactor 32 and/or the compensating converter 34 in more detail. In the case of an active inductive reactor 32, each branch 70 may be as shown in Fig. 5. The branches 70 may be star-connected at one end and connected to one of the phases 28a, 28b, 28c with the other end.

In the case of a compensating converter 34, each branch 70 may be a converter (such as an active controllable bridge converter) with an internal energy storage, for example in the form of a capacitor. The branches 70 may form a static var compensator, which may be controlled by the controller 54.

Fig. 8 shows a phase of an active inductive reactor 32. The active inductive reactor 32 comprises an input 72 and an output 74. A bypass switch 76 and an inductor 78 are series-connected between the input 72 and the output 74. The bypass switch 76 is a controllable, bidirectional switch, which is composed of two anti-parallel thyristors 82.

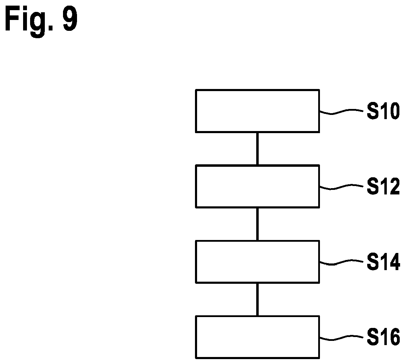

Fig. 9 shows a flow diagram of a method that may performed automatically by the controller 54.

In step S10, during a start-up of the power supply system 12, the converter cells 64 of the converter circuits 46a, 46b, 46c are bypassed by closing a bypass switch 60. The power supply system 12 is connected with its AC input 20 to the electrical grid 22 and is energized. After energization of a transformer 26, which for example may be measured by measuring currents and/or voltages at the AC input side of the power supply system 12, the bypass switch 60 may be opened and/or the converter cells 64 may be controlled for adjusting the electrode current.

In step S12, the controller 54 measures one or more currents and/or one or more voltages in the power supply system 12. These voltages or currents may be an AC input voltage, an AC input current, an intermediate voltage and/or an intermediated current between the converter circuits 46a, 46b, 46c and the transformer 26, an AC output voltage and/or an AC output current.

From the measured quantities, an electrode current supplied to the electrodes 14 may be determined. For example, the electrode current may be directly measured as the AC output current or may be estimated from other measured quantities.

The converter cells 64 of the converter circuits 46a, 46b, 46c are controlled, such that the electrode current is adjusted to a nominal current. The nominal current may be provided by an outer control loop or may be determined by the controller 54 itself, for example, in dependence of an operation condition and/or a power that should be supplied to the electrodes 14.

In step S14, an overvoltage and/or a surge current in the converter circuit 46a, 46b, 46c is detected by the controller based on the measured quantities. In the case, such as fault is detected, the controller 54 protects the converter circuit 46a, 46b, 46c with the bypass switch 60 by opening and/or closing the bypass switch 60.

In step S16, the controller 54 also determines a flicker value from the measured quantities, for example from the AC input voltage. The active inductive reactor 32 and/or the compensating converter 34 then may be controlled by the controller 54 to minimize the flicker value.

It also may be that a further control objective of the converter circuits 46a, 46b, 46c is to minimize the flicker, and the converter circuit 46a, 46b, 46c and their converter cells 64 may be controlled accordingly. In this case, flicker control only may be performed with the converter circuits 46a, 46b, 46c.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: arc furnace
- 12: power supply system
- 14: electrode
- 16: vessel
- 18: mechanical actuator
- 20: AC input
- 22: electrical grid
- 24: AC output
- 26: transformer
- 26a: primary side
- 26b: secondary side
- 28a: primary side phase
- 28b: primary side phase
- 28c: primary side phase
- 30a: secondary side phase
- 30b: secondary side phase
- 30c: secondary side phase
- 32: active inductive reactor
- 34: compensating converter
- 36: harmonic filter
- 36a: filter component
- 36b: filter component
- 36c: filter component
- 36d: filter component
- 38: filter capacitor
- 40: filter inductor
- 42: line filter
- 44: filter inductor
- 46a: converter circuit
- 46b: converter circuit
- 46c: converter circuit
- 48: passive filter and/or reactor
- 50: passive filter and/or reactor
- 52: filter inductor
- 54: controller
- 56: circuit input
- 58: circuit output
- 60: bypass switch
- 62: inductor
- 64: converter cell
- 66: inductor
- 68: thyristor
- 70: branch
- 72: input
- 74: output
- 76: bypass switch
- 78: inductor
- 82: thyristor
- 100: full-bridge
- 102: half-bridge
- 104: semiconductor switch
- 106: midpoint
- 108: cell capacitor
- 110: transformer winding
- 112: star-point

## Claims

1. A power supply system (12) for an electric arc furnace (10), the power supply system (12) comprising:
an AC input (20) connectable to an electrical grid (22) and an AC output (24) for supplying at least one power electrode (14) of the arc furnace (10);
a converter circuit (46a, 46b, 46c) interconnected between the AC input (20) and the AC output (24);
wherein the converter circuit (46a, 46b, 46c) comprises at least one converter cell (64) with a capacitor (108) and semiconductor switches (104) for series connecting the capacitor between a circuit input (56) and a circuit output (58) of the converter circuit (46a, 46b, 46c).

2. The power supply system of claim 1,
wherein the semiconductor switches (104) of the converter cell (64) form two parallel connected half-bridges (102), which midpoints (106) are connected between the circuit input (56) and the circuit output (58);
wherein the capacitor (108) is connected in parallel to the half-bridges (102).

3. The power supply system of claim 1 or 2,
wherein the converter circuit (46a, 46b, 46c) comprises a plurality of converter cells (64) connected in series between the circuit input (56) and the circuit output (58).

4. The power supply system (12) of one of the previous claims,
wherein the converter circuit (46a, 46b, 46c) comprises a controllable bypass switch (60), which is connected in parallel with the at least one converter cell (64) and which is adapted for connecting and disconnecting the circuit input (56) and the circuit output (58); and/or
wherein the bypass switch (60) is composed of semiconductor switches (68) or the bypass switch (60) is a mechanical switch.

5. The power supply system (12) of one of the previous claims,
wherein an inductor (66) is connected in series with the at least one converter cell (64); and/or
wherein a further inductor (62) is connected in series with a bypass switch (60) between the circuit input (56) and the circuit output (58).

6. The power supply system (12) of one of the previous claims, further comprising:
a transformer (26) interconnected between the AC input (20) and the converter circuit (46a, 46b, 46c); or
a transformer (26) interconnected between the converter circuit (46a, 46b, 46c) and the AC output (24);or
a transformer (26) with windings (110) connected to a star-point (112) at a primary side and/or a secondary side, wherein the converter circuit (46a, 46b, 46c) is connected in the star-point (112).

7. The power supply system (12) of one of the previous claims, further comprising:
a harmonic filter (36) interconnected in the AC input (20);
wherein the harmonic filter (36) comprises at least two filter components (36a, 36b, 36c, 36d), each of which comprises a filter capacitor (38) and a filter inductor (40) and each of which is adapted to another higher order harmonic of an AC input voltage.

8. The power supply system (12) of one of the previous claims, further comprising:
an active inductive reactor (32) interconnected into the AC input (20), wherein the active inductive reactor (32) comprises a bypass switch (76) and an inductor (78) connected to the AC input (20); and/or
a compensating converter (34) interconnected into the AC input (20);
wherein the active inductive reactor (32) and/or the compensating converter (34) are controlled to minimize a flicker in the AC input (20).

9. The power supply system (12) of one of the previous claims,
wherein the AC input (20) has at least two phases (28a, 28b, 28c) and/or the AC output has at least two phases (30a, 30b, 30c);
wherein a converter circuit (46a, 46b, 46c) is interconnected in each phase (28a, 28b, 28c) of the AC input (20) and/or in each phase (30a, 30b, 30c) of the AC output (24).

10. A method for controlling a power supply system (12) according to one of the previous claims, the method comprising:
determining an electrode current supplied to the at least one electrode (14);
controlling the at least one converter cell (64), such that the electrode current is adjusted to a defined current.

11. The method of claim 10, further comprising:
determining a flicker in the AC input (20) of the power supply system (12);
controlling the converter cell (64), such that the flicker is reduced.

12. The method of claim 10 or 11, further comprising:
during a start-up of the power supply system (12), bypassing the converter cell (64) by closing a bypass switch (60);
after energization of a transformer (26) connected between the AC input (20) and the AC output (24), controlling the converter cell (64) for adjusting the electrode current and opening the bypass switch (60).

13. The method of one of claims 10 to 12, further comprising:
detecting an overvoltage and/or a surge current in the converter circuit (46a, 46b, 46c);
protecting the converter circuit (46a, 46b, 46c), when an overvoltage and/or a surge current is detected, by switching the converter circuit (46a, 46b, 46c) in a bypass state.

14. The method of one of claims 10 to 13, further comprising:
wherein the converter circuit (46a, 46b, 46c) is switched into a bypass state by switching the converter cell (64) into a bypass state; and/or
wherein the converter circuit (46a, 46b, 46c) is switched into a bypass state by switching the converter cell by closing a bypass switch (60).

15. An electric arc furnace (10), comprising:
a power supply system (12) according to one of the claims 1 to 10;
a controller (54) adapted for performing the method according to one of claims 11 to 14;
a vessel (16) for receiving metal material;
power electrodes (14) for melting the metal material, when supplied with current from the power supply system (12).
